# EUROPEAN PATENT SPECIFICATION

(11) **EP 1 736 959 B1**
(45) Date of publication and mention of the grant of the patent: **20.02.2013**
(21) Application number: 05026899.4
(22) Date of filing: 08.12.2005
(51) Int. Cl.: G09G 3/36, G09G 3/20

(54) **Apparatus and method for driving image display device**
Verfahren und Einrichtung zum Steuern eines Anzeigegeräts
Méthode et dispositif de commande d'un appareil d'affichage

(30) Priority: 21.06.2005 KR 2005053524
(43) Date of publication of application: 27.12.2006
(73) Proprietor: LG Display Co., Ltd., Youngdungpo-gu, Seoul (KR)
(72) Inventor: Jang, Chul Sang 207-601 Hyangchon Hyundai 4cha Apt, Anyang-si Gyeonggi-do (KR); Kim, Jong Hoon, Gunpo-si Gyeonggi-do (KR)
(74) Representative: Viering, Jentschura & Partner

(56) References cited:
- EP-A- 1 414 013
- US-A1- 2002 008 682
- US-A1- 2002 015 028
- US-A1- 2005 264 586
- US-B1- 6 611 247

## Description

### Technical Field

The present application relates to a display device, and more particularly, to an apparatus and method for driving an image display device in which data signals are transmitted in a multilevel format.

### BACKGROUND Discussion of the Related Art

Various flat panel displays that can reduce weight and volume of a display with respect to a cathode ray tube have been developed. Examples of the flat panel displays include a liquid crystal display (LCD), a field emission display (FED), a plasma display panel (PDP), and a light emitting display (LED).

Among them, the LCD includes a thin film transistor substrate, a color filter substrate, and a liquid crystal layer. The thin film transistor substrate includes a plurality of liquid crystal cells arranged in regions defined by a plurality of gate and data lines, and a plurality of thin film transistors serving as switching elements formed in the respective liquid crystal cells. The liquid crystal layer is formed between thin film transistor substrate and the color filter substrate, wherein the thin film transistor substrate is spaced at a predetermined interval from the color filter substrate. The LCD displays desired images by forming an electric field in the liquid crystal layer depending on data signals to control the transmission of light.

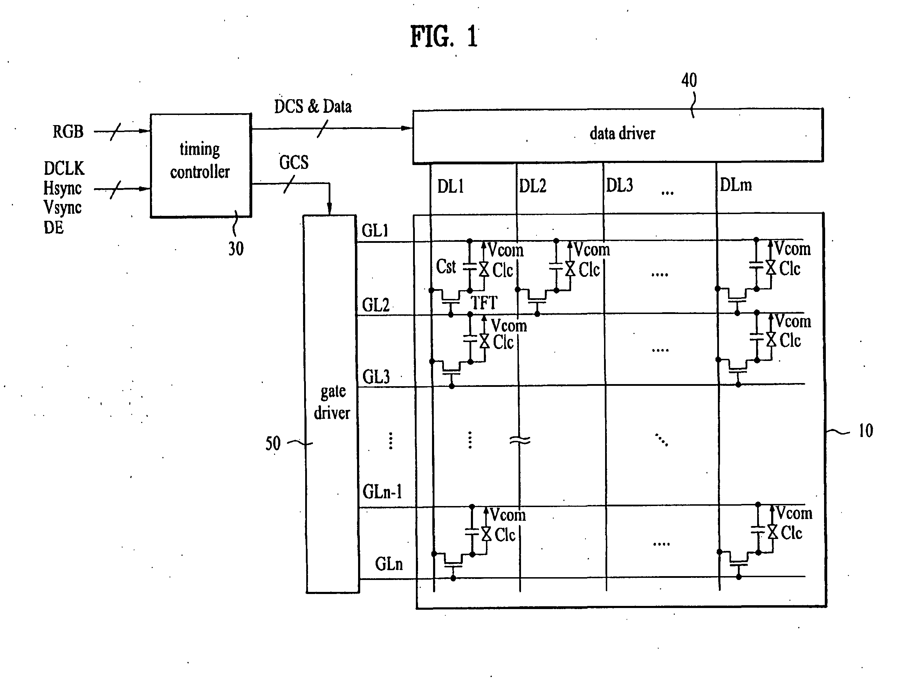

A related art apparatus for driving an LCD, shown in FIG. 1, includes an liquid crystal panel 10 including liquid crystal cells defined by first to nth gate lines GL1 to GLn and first to mth data lines DL1 to DLm, a data driver 40 supplying an analog image signal to the data lines DL1 to DLm, a gate driver 50 supplying scan pulses to the gate lines GL1 to GLn, and a timing controller 30 aligning an externally input digital source data (RGB) to be suitable for driving of the liquid crystal panel 10, supplying the aligned digital source data to the data driver 40 and controlling the data driver 40 and the gate driver 50.

The liquid crystal panel 10 includes a thin film transistor (TFT) formed in a region defined by the gate lines GL1 to GLn and the data lines DL1 to DLm, liquid crystal cells and thin film transistors. The thin film transistor supplies data signals from the data lines DL1 to DLm to the liquid crystal cells in response to the scan pulses from the gate lines GL1 to GLn. The liquid crystal cell is comprised of common electrodes facing each other a liquid crystal interposed therebetween and sub pixel electrodes connected to the thin film transistor. The liquid crystal cells have an electrical characteristic are equivalent to a capacitor Clc. The liquid crystal cell also includes a storage capacitor Cst connected to a previous gate line to maintain the data signals stored in the liquid crystal capacitor Clc until the next data signals are stored therein.

The timing controller 30 aligns the externally input digital source data (RGB) to be suitable for driving of the liquid crystal panel 10 and supplies the aligned digital source data to the data driver 40. Also, the timing controller 30 generates data control signals DCS and gate control signals GCS using a main clock DCLK, a data enable signal DE, and horizontal and vertical signals Hsync and Vsync, which are externally input, so as to control the driving timing of the data driver 40 and the gate driver 50.

The gate driver 50 includes a shift register that sequentially generates scan pulses, i.e., gate high pulses, in response to the gate control signal GCS from the timing controller 30. The gate driver 50 includes a plurality of gate driver integrated circuits.

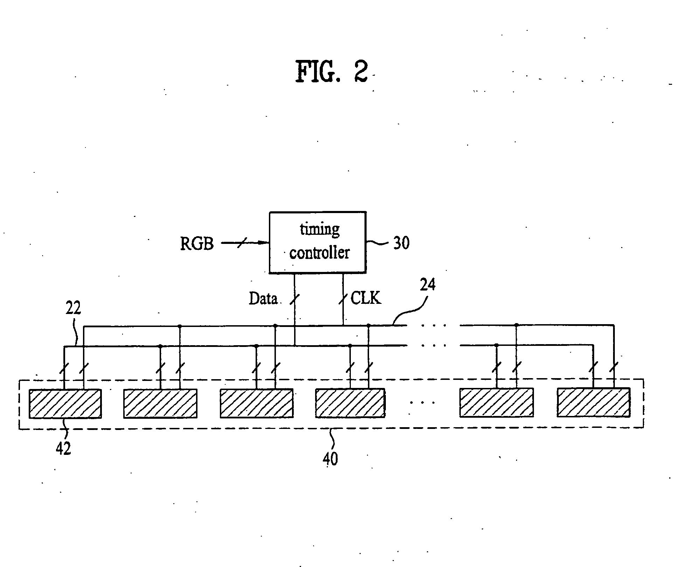

The data driver 40, as shown in FIG. 2, includes a plurality of data driver integrated circuits that supply analog image signals to the respective data lines of the liquid crystal panel10.

As shown in FIG. 2, each of the data driver integrated circuits 42 converts the data signals aligned from the timing controller 30 to the analog image signals in response to the data control signals DCS supplied from the timing controller 30 and supplies to the data lines DL1 to DLm the analog image signals corresponding to one horizontal line per one horizontal period in which the scan pulses are supplied into the gate lines GL1 to GLn. That is, each of the data driver integrated circuits 42 generates a plurality of gamma voltages having different voltage values corresponding to the number of gray levels of the data signals and selects one gamma voltage as the analog image signal depending on the gray level values of the data signals to supply the selected signal to the data lines DL1 to DLm.

The timing controller 30 converts the external digital source data (RGB) to TTL/CMOS level depending on a CMOS interface mode and transmits the converted data signals to the data driver 40 in one port-to-one port mode or one port-to-two port mode.

An apparatus for driving an LCD, as shown in FIG. 2, includes a plurality of data transmission lines 22 for data transmission between the timing controller 30 and each data driver integrated circuit 42, and a plurality of control signal transmission lines 24 for transmission of the data control signals DCS.

The timing controller 30 supplies the data signals of the TTL/CMOS level to the data transmission lines 22 and at the same time supplies the data control signals DCS to the control signal transmission lines 24.

Each of the data driver integrated circuits 42 is connected to the data transmission lines 22 and the control signal transmission lines 24 in common. Thus, the respective data driver integrated circuits 42 are sequentially driven depending on the data control signals DCS supplied from the control signal transmission lines 24 to receive the data signals from the data transmission lines 22 and convert the received data signals to the analog image signals to supply the converted signals to the respective data lines.

However, this apparatus for driving an LCD has several problems. If resolution of the liquid crystal panel 10 increases, power consumption and electromagnetic interference (EMI) increase due to increase of data transmission lines and driving frequencies. Also, a problem arises in that the increase of the data transmission lines increases the cost of a printed circuit board.
US-B1-6 611 247 also discloses an apparatus for driving an image display device including a display unit, a plurality of data driver integrated circuits supplying image signal to the display unit, a timing controller converting I bits digital source data to a plurality of voltage levels to the respective data driver integrated circuits and controlling the data driver circuits.

### SUMMARY

An apparatus and a method for driving an image display device according to independent claims 1 and 5 is described. Further embodiments of this apparatus and method are described in the dependent claims.

### BRIEF DESCRIPTION OF THE DRAWINGS

FIG. 1 is a block diagram illustrating a related art apparatus for driving an image display device;

FIG. 2 illustrates a connection structure between a timing controller and a plurality of data driver integrated circuits shown in FIG. 1;

FIG. 3 illustrates an apparatus for driving an image display device;

FIG. 4 illustrates waveforms of data signals output from a timing controller shown in FIG. 3;

FIG. 5 is a block diagram illustrating a timing controller shown in FIG. 3;

FIG. 6 illustrates a plurality of voltage levels converted by a digital-to-analog converter (DAC) shown in FIG. 5;

FIG. 7 illustrates a connection structure between a timing controller and a plurality of data driver integrated circuits shown in FIG. 3;

FIG. 8 illustrates another connection structure between a timing controller and a plurality of data driver integrated circuits shown in FIG. 3; and

FIG. 9 is a block diagram illustrating each data driver integrated circuit shown in FIG. 3.

### DETAILED DESCRIPTION

Exemplary embodiments may be better understood with reference to the drawings, but these embodiments are not intended to be of a limiting nature. Like numbered elements in the same or different drawings perform equivalent functions.

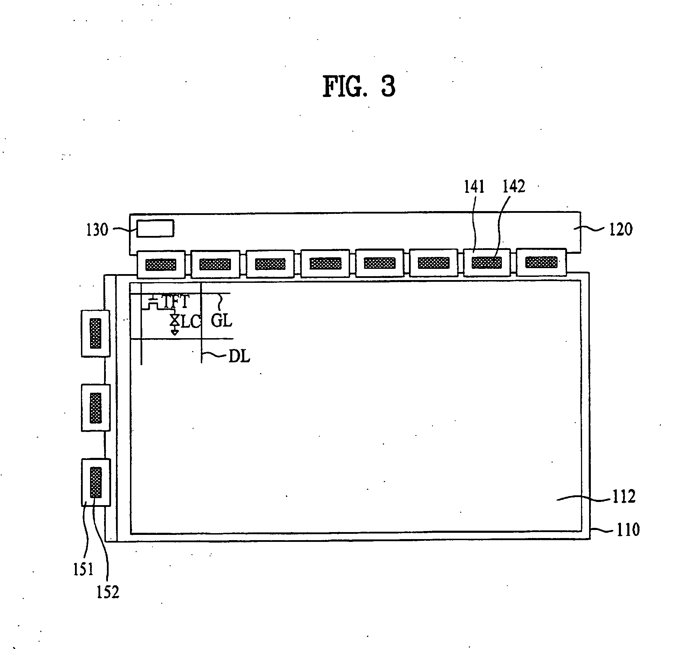

The apparatus for driving an image display device shown in FIG. 3 includes a display panel 110 including an image display unit 112 for displaying images, a plurality of gate driver integrated circuits 152 supplying scan pulses to the image display unit 112, a plurality of data driver integrated circuits 142 supplying analog image signals to the image display unit 112, and a timing controller 130 converting externally supplied i bit digital source data to a plurality of voltage levels to supply the converted voltage levels to the respective data driver integrated circuits 142 and controlling the data driver integrated circuits 142 and the gate driver integrated circuits 152.

The apparatus for driving an image display device may further include a printed circuit board 120 provided with the timing controller 130 and a power circuit (not shown), a plurality of tape carrier packages (TCP) 141 provided with the data driver integrated circuits 142 attached between the printed circuit board 120 and the display panel 110, and a plurality of gate TCP 151 provided with the gate driver integrated circuits 152 attached to the display panel 110.

The image display unit 112 displays images by controlling light transmittance of liquid crystal (LC) cells formed in a matrix arrangement. Each of the liquid crystal cells includes a thin film transistor (TFT) serving as a switching element connected to a crossing point where gate lines GL cross data lines DL. The data lines DL are supplied with the analog image signals from the respective data driver integrated circuits 142.

Each of the data TCP 141 is attached between the printed circuit board 120 and the display panel 110 by a tape automated bonding (TAB) method. Input pads of the respective data TCP 141 are electrically connected to the printed circuit board 120 and their output pads are electrically connected to a data pad of the display panel 110. The data driver integrated circuits 142 are provided on the respective data TCP 141.

The respective gate TCP 141 are electrically connected to a gate pad of the display panel 110 by the TAB method. The gate driver integrated circuits 152 are provided on the respective gate TCP 141.

The printed circuit board 120 is provided with a reference gamma voltage generator (not shown) that supplies reference gamma voltages to the timing controller 130, a power circuit (not shown) and the respective data driver integrated circuits 142. Also, the printed circuit board 120 is provided with signal lines electrically connected between the respective elements.

The timing controller 130 generates data control signals DCS and gate control signals GCS using a main clock DCLK, a data enable signal DE, and horizontal and vertical signals Hsync and Vsync, which are externally input through a user connector or other interface, so as to control each driving timing of the data driver integrated circuits 142 and the gate driver integrated circuits 152.

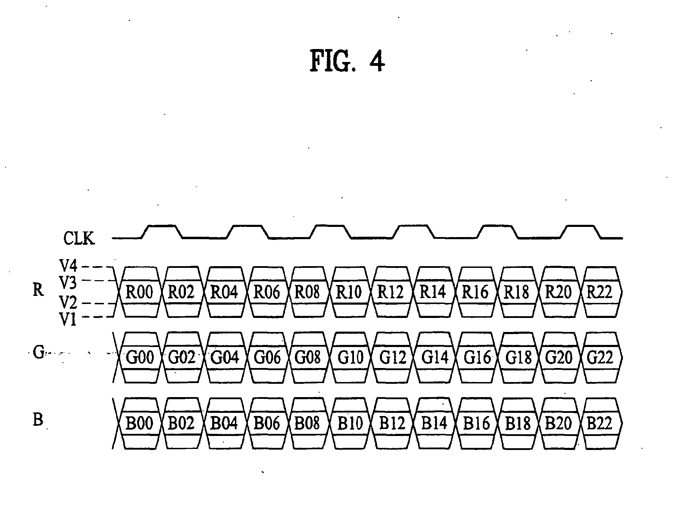

The timing controller 130 compresses 2 bit groups of the i bit digital source data (RGB),converts the compressed data to a plurality of voltage levels and supplies the converted voltage levels to the respective data driver integrated circuits 142 through a data transmission line. As shown in FIG. 4, the timing controller 130 aligns the i bit digital source data (RGB) on the printed circuit board 120 to be suitable for driving of the display panel 110, and converts the aligned data signals to a plurality of voltage levels V1 to V4 depending on clock signals CLK to supply the converted voltage levels to the respective data driver integrated circuits 142.

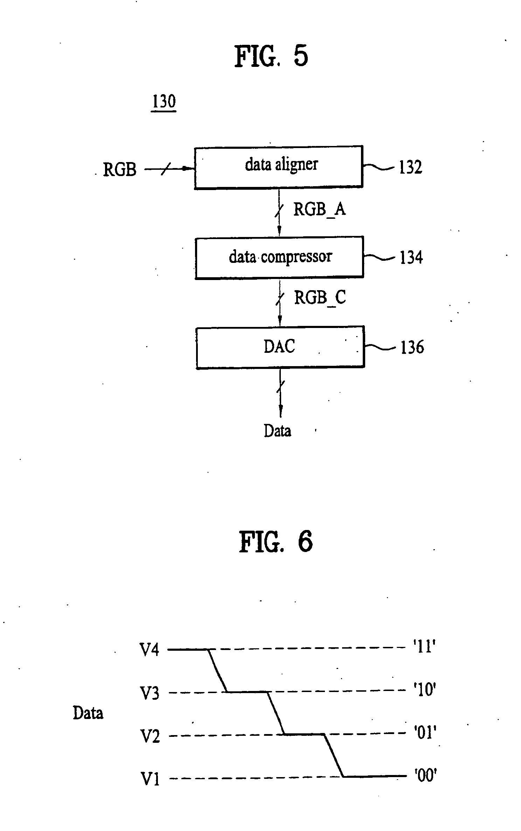

The timing controller 130, as shown in FIG. 5, includes a data aligner 132 aligning the external i bit digital source data (RGB), a data compressor 134 compressing the aligned data RGB_A for the 2 bit groups of the i bit digital source data, and a digital-to-analog converter (DAC) 136 converting the compressed data RGB_C to a plurality of voltage levels and transmitting them to the respective data driver integrated circuits 142.

The data aligner 132 aligns the i bit digital source data (RGB) to correspond to resolution of the display panel 110 and supplies the aligned data to the data compressor 134.

The data compressor 134 compresses at least 2 bit groups of the aligned data RGB_A supplied from the data aligner 132 and supplies the compressed data to the DAC 136. For example, the data compressor 134 compresses first bits R0, G0 and B0 and second bits R1, G1 and B1, third bits R2, G2 and B2 and fourth bits R3, G3 and B3, fifth bits R4, G4 and B4 and sixth bits R5, G5 and B5, and seventh bits R6, G6 and B6 and eighth bits R7, G7 and B7, if the aligned data RGB_A comprises 8 bits. In other words, the data compressor 134 generates compressed data RGB_C by adding n+1 bit to n bit in the aligned data RGB_A as shown in Table 1.

**[Table 1]**

| n+1 bit | N bit | Compressed data(RGB C) |
|---|---|---|
| 0 | 0 | 00 |
| 0 | 1 | 01 |
| 1 | 0 | 10 |
| 1 | 1 | 11 |

The DAC 136 converts the compressed data RGB_C supplied from the data compressor 134 to the first to fourth voltage levels V1 to V4 as shown in Table 2.

**[Table 2]**

| Compressed data (RGB C) | Voltage level |
|---|---|
| 00 | V1 |
| 01 | V2 |
| 10 | V3 |
| 11 | V4 |

In Table 2, the first voltage level V1 may have a zero voltage value, and the fourth voltage level V4 has may have a voltage value of approximately 1 to approximately 1.5 volts for low voltage transmission of the data signals. The first to third voltage levels may have voltage values obtained by dividing the value of the fourth voltage level into three parts.

The DAC 136, as shown in FIG. 6, converts the compressed data RGB_C supplied from the data compressor 134 to data signals having any one of the first to fourth voltage levels V1 to V4 in a digital-to-analog converter.

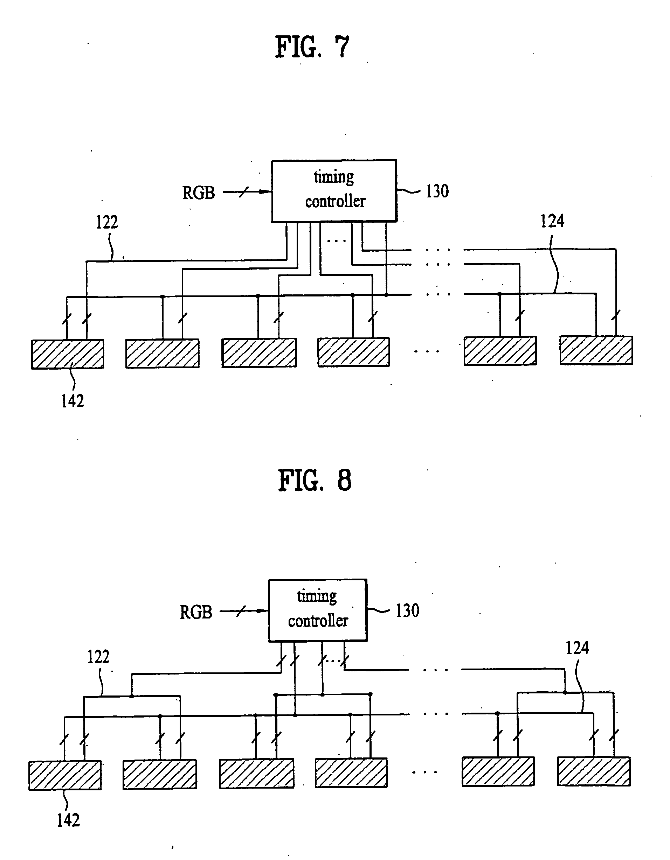

The aforementioned timing controller 130, as shown in FIG. 7, transmits the data signals of red (R), green (G), and blue (B) converted to the voltage levels V1 to V4 through three data transmission lines 122 to the data driver integrated circuits 142 of the data driver 140. Also, the timing controller 130 transmits the data control signals DCS in the control signal transmission lines 124 to the data driver integrated circuits 142 in common.

Meanwhile, the timing controller 130, as shown in FIG. 8, can transmit the data signals of red (R), green (G), and blue (B) converted to the voltage levels V1 to V4 through the three data transmission lines 122 to the data driver integrated circuits 142 in pairs. Also, the timing controller 130 transmits the data control signals in the control signal transmission lines 124 to the data driver integrated circuits 142 in common.

Each of the gate driver integrated circuits 152 includes a shift register that sequentially generates scan pulses, i.e., gate high pulses in response to the gate control signal GCS from the timing controller 130. The gate driver integrated circuits 152 are sequentially driven in response to the gate control signal GCS to sequentially supply the scan pulses to the gate lines of the display panel 110.

Each of the data driver integrated circuits 142 restores the data signals of the multilevel format supplied from the DAC 136 of the timing controller 130 to the original i bit digital data signals (RGB) and converts the restored i bit digital data signals (RGB) to the analog image signals to supply them the respective data lines DL.

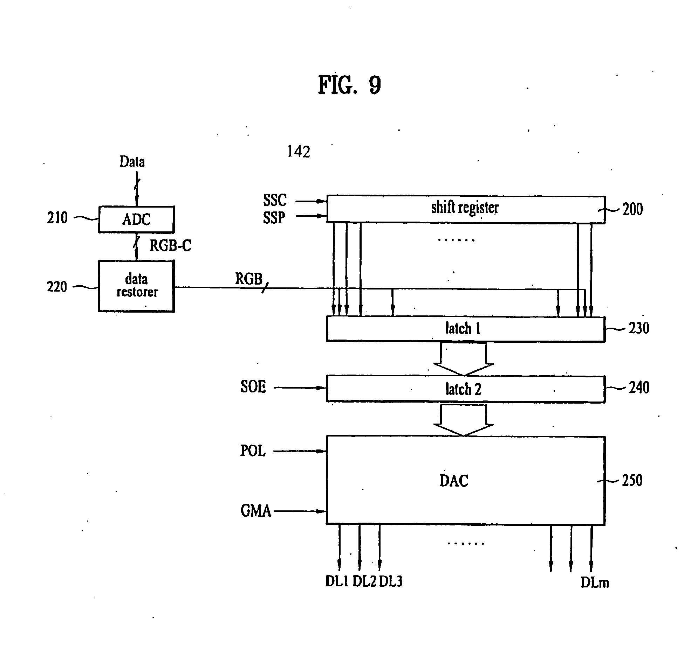

Each of the data driver integrated circuits 142, as shown in FIG. 9, includes an analog-to-digital converter (ADC) 210 converting the data signals of the multilevel format supplied from the timing controller 130 to digital data signals RGB_C compressed in 2 bit groups in an analog-to-digital mode, a data restorer 220 restoring the data signals RGB_C from the ADC 210 to i bit digital data signals RGB, a shift register 200 generating sampling signals using a source shift clock SSC and a source start pulse SSP among the data control signals DCS from the timing controller 130, a first latch 230 sequentially sampling the data signals RGB corresponding to one line supplied from the data restorer 220 depending on the sampling signals, a second latch 370 simultaneously outputting the data signals sampled by the first latch 230 and corresponding to one line depending on a source output enable (SOE) signals among the data control signals DCS, and a DAC 250 converting the data signals corresponding to one line supplied from the second latch 370 to analog image signals to supply the converted signals to the respective data lines DL of the display panel 110.

The ADC 210 converts the data signals of the multilevel format supplied from the timing controller 130 in an analog-to-digital mode to generate the compressed data RGB_C in 2 bits groups as shown in Table 3 depending on the voltage levels of the data signals of the multilevel format.

**[Table 3]**

| Voltage level | Compressed data (RGB C) |
|---|---|
| V1 | 00 |
| V2 | 01 |
| V3 | 10 |
| V4 | 11 |

The ADC 210 generates the compressed data RGB_C of '00' if the voltage value of the data signals is the first voltage level V1, the compressed data RGB_C of '01' if the voltage value of the data signals is the second voltage level V2, the compressed data RGB_C of '10' if the voltage value of the data signals is the third voltage level V3, and the compressed data RGB_C of '11' if the voltage value of the data signals is the fourth voltage level V4.

The data restorer 220 arranges the 2 bit groups of the compressed data from the ADC 210 into n bit and n+1 bit as shown in Table 4, to restore the i bit digital data RGB.

**[Table 4]**

| Compressed data (RGB C) | n+1 bit | n bit |
|---|---|---|
| 00 | 0 | 0 |
| 01 | 0 | 1 |
| 10 | 1 | 0 |
| 11 | 1 | 1 |

The shift register 200 shifts the source start pulse SSP depending on the source shift clock SSC to generate the sampling signals and sequentially supplies the sampling signals to the first latch 230.

The first latch 230 sequentially samples the data signals RGB corresponding to one line supplied from the data restorer 220 depending on the sampling signals sequentially supplied from the shift register 200 and supplies the sampled signals to the second latch 240.

The second latch 240 stores the digital data RGB sampled by the first latch 230 for the unit of one line and outputs the digital data RGB for the unit of one line to the DAC 250 by synchronizing the digital data RGB for the unit of one line with the source output enable SOE signal.

The DAC 250 converts the digital data RGB supplied from the second latch 240 to the analog image signals using a plurality of input gamma voltages GMA and supplies the converted signals to the respective data lines DL of the display panel 110. The DAC 250 converts the digital data RGB to analog image signals of positive polarity (+) or negative polarity (-) depending on a polarity control signal (POL) among the data control signals DCS from the timing controller 130.

Thus, 2 bit groups of the i bit digital source data RGB are compressed and converted into a multilevel format so that analog data may be transmitted to the data driver integrated circuits 142 through a data transmission line.

Since the data of 2 bits groups are transmitted in four voltage levels, transmission frequencies of the data can be reduced. This reduces EMI and the size of the printed circuit board 120.

This method and apparatus may be used for other display devices including a plasma display panel and a light-emitting display device in addition to the aforementioned LCD that displays images by controlling light transmittance of the liquid crystal.

2 bit units of the digital data converted into a plurality of voltage levels so that the digital data is transmitted to the data driver integrated circuits through an analog data transmission line. Therefore, it is possible to reduce transmission rate of the data, the number of the data transmission lines, EMI, and the size of the printed circuit board.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. An apparatus for driving an image display device comprising
a display panel (110) including an image display unit for displaying images, the apparatus comprising
a plurality of data driver integrated circuits (142) supplying image signals to the image display unit (112);
a timing controller (130) comprising:
an alignment unit (132) adapted to align externally input i bit digital source data (RGB) to be suitable for driving of the display panel (110), where i is a positive integer,
a data compressing unit (134) adapted to generate compressed i bit digital source data from the aligned i bit digital source data by grouping the bits of the aligned i bit digital source data into groups of two bits,
a digital to analog converter (136) adapted to convert the compressed i bit digital source data to four analog voltage levels (V1-V4), wherein each of the four analog voltage levels (V1 - V4) corresponds to a respective one of the binary values that a respective group of two bits can assume;
the timing controller (130) being further adapted to supply the analog voltage levels (V1-V4) to the respective data driver integrated circuits (142) and to control the data driver integrated circuits;
each of the data driver integrated circuits (142) comprising:
an analog-to-digital converter (210) converting the plurality of voltage levels (V1-V4) to groups of two bits of digital data,
a data restorer (220) being adapted to restore the i bit digital source data from the groups of two bits of digital data, wherein the decompression is inverse to the compression, and
a digital-to-analog converter (250) converting the i bit digital data to analog image signals and supplying the analog image signals to the image display unit (112) to display the images.

2. The apparatus as in claim 1, wherein the first to third voltage levels (V1-V3) are obtained by dividing the fourth voltage level (V4) into three parts.

3. The apparatus as in claim 1, wherein each of the data driver integrated circuits (142) further includes:
a shift register (200) generating sampling signals; and
a latch (230, 240) latching the i bit digital data from the data restorer depending on the sampling signals and supplying the latched i bit digital data to the digital-to-analog converter (250).

4. The apparatus as in claim 1, wherein the timing controller (130) supplies the plurality of voltage levels (V1-V4) to the data driver integrated circuits (142) in pairs.

5. A method for driving an image display device including a display panel (110) including an image display unit (112) for displaying images, the method comprising:
aligning externally input i bit digital source data (RGB) to be suitable for driving the display panel (110), where i is a positive integer;
generating compressed i bit digital source data from the aligned i bit digital source data by grouping the bits of the aligned i bit digital source data into groups of two bits;
converting the compressed i bit digital source data to four analog voltage levels (V1-V4), wherein each of the four analog voltage levels (V1 - V4) corresponds to a respective one of the binary values that a respective group of two bits can assume;
supplying the analog voltage levels (V1-V4) to the respective data driver integrated circuits (142);
restoring the i bit digital source data from the received analog voltage levels (V1-V4); and
converting the restored i bit digital source data to analog image signals; and
supplying scan pulses and the analog image signals to the image display unit (112) to display the images.

6. The method as in claim 5, wherein the first to third voltage levels (V1-V3) are obtained by dividing the fourth voltage level (V4) into three parts.

7. The method as in claim 5, wherein the step of restoring the plurality of voltage levels (V1-V4) to i bit digital data to convert them to the image signals includes:
converting the plurality of voltage levels to groups of two bits of digital data;
restoring the groups of two bits of digital data to i bit digital data to generate data signals;
generating sampling signals;
latching the data signals depending on the sampling signals; and
converting the latched data signals to the image signals in a digital-to-analog converter (250) to supply the converted signals to the image display unit (112).

## Patentansprüche

1. Vorrichtung zum Ansteuern einer Bildanzeigeeinrichtung aufweisend ein Anzeigepanel (110), welches eine Bildanzeigeeinheit zum Anzeigen von Bildern aufweist, wobei die Vorrichtung aufweist
eine Mehrzahl von integrierten Datenansteuerschaltkreisen (142), die der Bildanzeigeeinheit (112) Bildsignale zuführen;
eine Zeitablaufsteuerung (130) aufweisend:
eine Ausrichtungseinheit (132), eingerichtet, extern eingegebene digitale i-Bit-Quelldaten (RGB) auszurichten, um zum Ansteuern des Anzeigepanels (110) geeignet zu sein, wobei i eine positive ganze Zahl ist,
eine Datenkompressionseinheit (134), eingerichtet, aus den ausgerichteten digitalen i-Bit-Quelldaten komprimierte digitale i-Bit-Quelldaten zu erzeugen mittels Gruppierens der Bits der ausgerichteten digitalen i-Bit-Quelldaten in Gruppen aus zwei Bits,
einen Digital-Analog-Wandler (136), eingerichtet, die komprimierten digitalen i-Bit-Quelldaten in vier Analogspannungspegel (V1-V4) umzuwandeln, wobei jeder der vier Analogspannungspegel (V1-V4) jeweils einem der binären Werte, die eine jeweilige Gruppe aus zwei Bits annehmen kann, entspricht;
wobei die Zeitablaufsteuerung (130) ferner eingerichtet ist, die Analogspannungspegel (V1-V4) den jeweiligen integrierten Datenansteuerschaltkreisen (142) zuzuführen und die integrierten Datenansteuerschaltkreise zu steuern;
wobei jeder der integrierten Datenansteuerschaltkreise (142) aufweist:
einen Analog-Digital-Wandler (210), der die Mehrzahl von Spannungspegeln (V1-V4) in Gruppen aus zwei Bits digitaler Daten umwandelt,
einen Datenwiederhersteller (220), der eingerichtet ist, die digitalen i-Bit-Quelldaten aus den Gruppen aus zwei Bits digitaler Daten wiederherzustellen, wobei die Dekompression invers zu der Kompression ist, und
einen Digital-Analog-Wandler (250), der die digitalen i-Bit-Daten in analoge Bildsignale umwandelt und die analogen Bildsignale der Bildanzeigeeinheit (112) zuführt, um die Bilder anzuzeigen.

2. Vorrichtung gemäß Anspruch 1, wobei der erste bis dritte Spannungspegel (V1-V3) erhalten werden durch Aufteilen des vierten Spannungspegels (V4) in drei Teile.

3. Vorrichtung gemäß Anspruch 1, wobei jeder der integrierten Datenansteuerschaltkreise (142) ferner aufweist:
ein Schieberegister (200), das Abtastsignale erzeugt; und
ein Auffangregister (230, 240), das die digitalen i-Bit-Daten von dem Datenwiederhersteller in Abhängigkeit von den Abtastsignalen zwischenspeichert und die zwischengespeicherten digitalen i-Bit-Daten dem Digital-Analog-Wandler (250) zuführt.

4. Vorrichtung gemäß Anspruch 1, wobei die Zeitablaufsteuerung (130) den integrierten Datenansteuerschaltkreisen (142) die Mehrzahl von Spannungspegeln (V1-V4) paarweise zuführt.

5. Verfahren zum Ansteuern einer Bildanzeigeeinrichtung, die ein Anzeigepanel (110) aufweist, das eine Bildanzeigeeinheit (112) zum Anzeigen von Bildern aufweist, das Verfahren aufweisend:
Ausrichten extern eingegebener digitaler i-Bit-Quelldaten (RGB), um zum Ansteuern des Anzeigepanels (110) geeignet zu sein, wobei i eine positive ganze Zahl ist;
Erzeugen komprimierter digitaler i-Bit-Quelldaten aus den ausgerichteten digitalen i-Bit-Quelldaten mittels Gruppierens der Bits der ausgerichteten digitalen i-Bit-Quelldaten in Gruppen aus zwei Bits;
Umwandeln der komprimierten digitalen i-Bit-Quelldaten in vier Analogspannungspegel (V1-V4), wobei jeder der vier Analogspannungspegel (V1-V4) jeweils einem der binären Werte, die eine jeweilige Gruppe aus zwei Bits annehmen kann, entspricht;
Zuführen der Analogspannungspegel (V1-V4) zu den jeweiligen integrierten Datenansteuerschaltkreisen (142);
Wiederherstellen der digitalen i-Bit-Quelldaten aus den empfangenen Analogspannungspegeln (V1-V4); und
Umwandeln der wiederhergestellten digitalen i-Bit-Quelldaten in analoge Bildsignale; und
Zuführen von Scan-Pulsen und der analogen Bildsignale zu der Bildanzeigeeinheit (112), um die Bilder anzuzeigen.

6. Verfahren gemäß Anspruch 5, wobei der erste bis dritte Spannungspegel (V1-V3) erhalten werden durch Aufteilen des vierten Spannungspegels (V4) in drei Teile.

7. Verfahren gemäß Anspruch 5, wobei der Schritt des Zurückversetzens der Mehrzahl von Spannungspegeln (V1-V4) in digitale i-Bit-Daten, um sie in die Bildsignale umzuwandeln, aufweist:
Umwandeln der Mehrzahl von Spannungspegeln in Gruppen aus zwei Bits digitaler Daten;
Zurückversetzen der Gruppen aus zwei Bits digitaler Daten in digitale i-Bit-Daten, um Datensignale zu erzeugen;
Erzeugen von Abtastsignalen;
Zwischenspeichern der Datensignale in Abhängigkeit von den Abtastsignalen; und
Umwandeln der zwischengespeicherten Datensignale in die Bildsignale in einem Digital-Analog-Wandler (250), um die umgewandelten Signale der Bildanzeigeeinheit (112) zuzuführen.

## Revendications

1. Appareil destiné à commander un dispositif d'affichage d'image comprenant un panneau d'affichage (110) incluant une unité d'affichage d'image pour afficher des images, l'appareil comprenant :
une pluralité de circuits intégrés pilotes de données (142) fournissant des signaux d'image à l'unité d'affichage d'image (112) ;
un contrôleur de synchronisation (130) comprenant :
une unité d'alignement (132) adaptée pour aligner des données de source numérique à i bits en provenance de l'extérieur (RVB) appropriées pour commander le panneau d'affichage (110), où i est un nombre entier positif ;
une unité de compression de données (134) adaptée pour générer des données de source numérique à i bits compressées à partir des données de source numérique à i bits alignées, en groupant les bits des données de source numérique à i bits alignées par groupes de deux bits ;
un convertisseur numérique-analogique (136) adapté pour convertir les données de source numérique à i bits compressées en quatre niveaux de tension analogique (V1-V4), chacun des quatre niveaux de tension analogique (V1-V4) correspondant à l'une respective des valeurs binaires que peut prendre un groupe respectif de deux bits ;
le contrôleur de synchronisation (130) étant en outre adapté pour fournir les niveaux de tension analogique (V1-V4) aux circuits intégrés pilotes de données respectifs (142) et pour commander les circuits intégrés pilotes de données ;
chacun des circuits intégrés pilotes de données (142) comprenant :
un convertisseur analogique-numérique (210) qui convertit la pluralité de niveaux de tension (V1-V4) en groupes de deux bits de données numériques ;
un dispositif de restauration de données (220) adapté pour restaurer les données de source numérique à i bits à partir des groupes de deux bits de données numériques, dans lequel la décompression est l'inverse de la compression ; et
un convertisseur numérique-analogique (250) qui convertit les données numériques à i bits en signaux d'image analogiques et qui fournit les signaux d'image analogiques à l'unité d'affichage d'image (112) afin d'afficher les images.

2. Appareil selon la revendication 1, dans lequel les trois premiers niveaux de tension (V1-V3) sont obtenus en divisant le quatrième niveau de tension (V4) en trois parties.

3. Appareil selon la revendication 1, dans lequel chacun des circuits intégrés pilotes de données (142) comprend en outre :
un registre à décalage (200) qui génère des signaux d'échantillonnage ; et
un verrou (230, 240) qui verrouille les données numériques à i bits en provenance du dispositif de restauration de données selon les signaux d'échantillonnage et qui fournit les données numériques à i bits verrouillées au convertisseur numérique-analogique (250).

4. Appareil selon la revendication 1, dans lequel le contrôleur de synchronisation (130) fournit la pluralité de niveaux de tension (V1-V4) aux circuits intégrés pilotes de données (142) par paires.

5. Procédé destiné à commander un dispositif d'affichage d'image comprenant un panneau d'affichage (110) incluant une unité d'affichage d'image (112) pour afficher des images, le procédé comprenant :
l'alignement de données de source numérique à i bits en provenance de l'extérieur (RVB) appropriées pour commander le panneau d'affichage (110), où i est un nombre entier positif ;
la génération de données de source numérique à i bits compressées à partir des données de source numérique à i bits alignées, en groupant les bits des données de source numérique à i bits alignées par groupes de deux bits ;
la conversion des données de source numérique à i bits compressées en quatre niveaux de tension analogique (V1-V4), chacun des quatre niveaux de tension analogique (V1-V4) correspondant à l'une respective des valeurs binaires que peut prendre un groupe respectif de deux bits ;
la fourniture des niveaux de tension analogique (V1-V4) aux circuits intégrés pilotes de données respectifs (142) ;
la restauration des données de source numérique à i bits à partir des niveaux de tension analogique reçus (V1-V4) ; et
la conversion des données de source numérique à i bits restaurées en signaux d'image analogiques ; et
la fourniture d'impulsions de balayage et des signaux d'image analogiques à l'unité d'affichage d'image (112) afin d'afficher les images.

6. Procédé selon la revendication 5, dans lequel les trois premiers niveaux de tension (V1-V3) sont obtenus en divisant le quatrième niveau de tension (V4) en trois parties.

7. Procédé selon la revendication 5, dans lequel l'étape consistant à restaurer la pluralité de niveaux de tension (V1-V4) en données numériques à i bits afin de les convertir en signaux d'image comprend :
la conversion de la pluralité de niveaux de tension en groupes de deux bits de données numériques ;
la restauration des groupes de deux bits de données numériques en données numériques à i bits afin de générer des signaux de données ;
la génération de signaux d'échantillonnage ;
le verrouillage des signaux de données selon les signaux d'échantillonnage ; et
la conversion des signaux de données verrouillés en signaux d'image dans un convertisseur numérique-analogique (250) afin de fournir les signaux convertis à l'unité d'affichage d'image (112).
